# EUROPEAN PATENT SPECIFICATION

(11) **EP 2 828 560 B1**
(45) Date of publication and mention of the grant of the patent: **01.03.2017**
(21) Application number: 13712736.1
(22) Date of filing: 18.03.2013
(51) Int. Cl.: E21B 33/12, E21B 17/08, F16L 15/04, F16L 23/16, F16J 15/06, F16J 15/08, G01M 3/28

(54) **DOUBLE METAL TO METAL KX SEAL**
DOPPELTE METALL-AN-METALL-KX-DICHTUNG
JOINT KX MÉTAL SUR MÉTAL DOUBLE

(30) Priority: 20.03.2012 NO 20120332
(43) Date of publication of application: 28.01.2015
(73) Proprietor: FMC Kongsberg Subsea AS, 3601 Kongsberg (NO)
(72) Inventor: BEKKEVOLD, Knut, Håvard, 3090 Hof (NO); MULLINS, Chance, Ray, Spring, TX 77379 (US)
(74) Representative: Onsagers AS
(86) International application number: PCT/EP2013/055545
(87) International publication number: WO 2013/139729

(56) References cited:
- EP-A1- 1 486 714
- WO-A1-01/98690
- GB-A- 2 066 383
- JP-A- 2010 096 329
- US-A- 4 168 853
- US-A1- 2012 139 190

## Description

### Field of the invention

The invention relates to a seal assembly to be used in connections between pipe elements, such as risers, hubs, modules, flowlines, connectors or similar. The seal assembly is particularly applicable in subsea applications.

### Background of the invention

It exists prior art solutions utilizing a single metal to metal seal for a great variety of applications subsea. As customer's requirements become more stringent, the requirement for a secondary seal has been introduced for such applications. The requirements are today met utilizing an additional elastomer seal. The additional elastomer seal has natural limitations in form of chemical compatibility and temperature range. An example of a prior art solution having a single metal to metal seal and an additional elastomeric seal is disclosed in Norwegian patent NO332742B. This patent relates to a tubular joint comprising first and second tubular elements, a metallic seal ring designed to form a primary seal positioned between the tubular members, and an additional seal radially outwardly of the primary seal. Other seal assemblies include those disclosed in document GB 2066383.

It has proved difficult to provide a seal, with metal to metal seal that is not damaged during make-up of connections. Seals comprising a single seal element might have low tolerance with regards to misalignments between the two parts that are connected due to the rigidity of the seal. This also makes it difficult to provide a double metal to metal seal system. If the degree of misalignment is high, the seal might be damaged, i.e. that it is not properly tight, or the connections on one or both of the parts being connected might be damaged.

An object of the invention is to provide a seal assembly that allows some degree of relative movement without damaging the seal, and which also provides a safer seal assembly and may be used as a metal to metal seal assembly.

### Summary of the invention

The invention is set forth and characterized in the independent claim, while the dependent claims describe other characteristics of the invention.

The invention concerns a seal assembly for a piping connection comprising;
- a first part having at least one projecting rib extending at least partially along an outer circumference thereof, and
- a second part arranged to be attached to the first part, the second part being provided with at least one recess on an inner surface thereof, which recess is adapted to receive the projecting rib when the first and second parts are connected, and the recess has a larger cross-section area than the cross-section area occupied by the projecting rib within the recess,
such that when the first and second parts are connected, they are free to move relative to each other in at least one direction. The inventive seal assembly permits minor relative movements between the first part and the second part of the seal assembly thereby accommodating for the possibility of providing double seal between the seal assembly and the piping ends where between the seal assembly should be positioned. Thereby accommodating the possibility of having a double seal, possibly a double metal to metal seal, between the interior of the pipe elements and the surroundings.

The seal assembly is preferably used in a connection between a first pipe element and a second pipe element, such as pipes, risers, hubs, modules, flowlines, connectors or similar. The first pipe element has a piping end that may be provided with a first seal pocket having first and second shoulders. Similarly the second pipe element has a second piping end that might be provided with a second seal pocket having third and fourth shoulders. Said shoulders are preferably configured to receive complementary corresponding shoulders arranged on the first part and second part of the seal assembly. The connection between shoulders on the piping end and the seal assembly provide a sealing connection.

The projecting rib may be one rib extending along the whole circumference of the first part, or it may be one, two or a number of ribs extending at least partially along the outer circumference of the first part.

The recess of the second part is adapted to receive the projecting rib. The recess may be of any shape, but in one embodiment the recess is of the same shape, or of similar shape, as the projecting rib, and preferably larger in all directions, both radially and axially, such that the second part is free to move relative the first part when the first part and second part are connected. In this embodiment the cross-section area of the second part is larger in all directions than the cross-section area occupied by the projecting rib within the recess when the first and second parts are connected. The radial extension of the recess, i.e. the depth, may be larger than the radial extension, i.e. height, of the projecting rib, and/ or the axial extension, i.e. the width, of the recess may be larger than the axial extension, i.e. the width, of the projecting rib.

In an embodiment the second part can be provided with at least one section extending at least partially along the inner surface from a first axial end ending in the recess. The at least one section and recess of the second part may be provided to receive the at least one projecting rib of the first part during connection of the first part and second part. When connecting the first part and second part, the projecting rib will enter the section at the first axial end and continue through the section before ending in the recess in the other end of the section.

According to the invention the projecting rib can be arranged on the first part and the recess can be arranged on the second part or, alternatively, the recess can be arranged on the first part, while the projecting rib can be arranged on the second part.

In another embodiment of the seal assembly the at least one section in the second part may be provided with threads, and the projecting rib on the first part may be provided with complementary threads. Thereby one may connect the two parts by rotating the one element relative the other until the rib is positioned with the recess and free of the threaded parts of the one section.

The at least first part and/ or second part of the seal assembly can be provided with at least one elastomer. The at least one elastomer can be arranged around the outer circumference of the first part and the second part or between the first or second part, possibly on one or more of first, second, third or fourth corresponding shoulders arranged on the first and second parts. In an embodiment the at least one elastomer may seal against the piping ends of the first pipe element and second pipe element. The connection with the seal assembly according to the invention can be made air-tight even with some misalignment of the geometrical configuration of the first seal pocket and second seal pocket. Additionally, the seal assembly may be air-tight even due to minor misalignments between the first pipe element and the second pipe element, as the first and second part of the seal assembly allow for some movement between them.

The first seal pocket and the second seal pocket of the piping ends of the first and second pipe elements, respectively, may in one embodiment be flanges or other means known to a person skilled in the art. Additionally, the connection between the first part and the second part can be air-tight.

In another embodiment the second part may be flexible, e.g. split or slit, allowing the second part to be easily connected to the first part, and to stay connected to the first part after the connection is made. The flexibility of the second part, e.g. due to the splits or slits, allows for the second part to expand radially during the connection, i.e. when the projecting rib is within the section, of the first part and the second part, and to return to normal position once the projecting rib is within the recess. This ensures that the seal assembly is installed as one piece, comprising the first part and the second part, in the piping connection. In an embodiment, the second part comprises a split ring that can be opened sufficiently to pass over the projecting rib of the first part.

In an alternative embodiment the seal assembly can be in fluid connection with means for performing pressure tests through at least one bore. The bore might be in fluid connection with pressure testing means arranged on the surface or on the seabed, which pressure testing means are known to a person skilled in the art.

In an embodiment of the seal assembly the first part and second part may be made of metal. In another embodiment the parts can be made of a composite material, or a mixture of metal and composite material, or one part of metal and the other of another material.

The form and shape of the first part and second part depend on the shape of the piping ends of the first and second pipe elements. In one embodiment the first part and second part can be circular-shaped, but they may have any shape to conform to the shape of the pipe elements, such as elliptical, oval, polygonal etc.

The invention will now be described in non-limiting embodiments and with reference to the attached drawings, wherein;

### Brief description of the drawings

Fig. 1A shows an embodiment of the invention prior to the seal assembly enters the first and second seal pockets.
Fig. 1B shows the embodiment of fig. 1A subsequent to that the seal assembly has entered the first seal pocket, but prior to that the seal assembly has entered the second seal pocket.
Fig. 1C shows the embodiment of fig. 1A and 1B subsequent to that the seal assembly has entered the first and second seal pockets.
Fig. 2A shows the first and second part of the seal assembly during connection.
Fig. 2B shows an exploded view of section A of the seal assembly in fig. 1A when the first part and second part are connected.
Fig. 2C shows an alternative embodiment of additional elastomer seals.

### Detailed description of a preferential embodiment

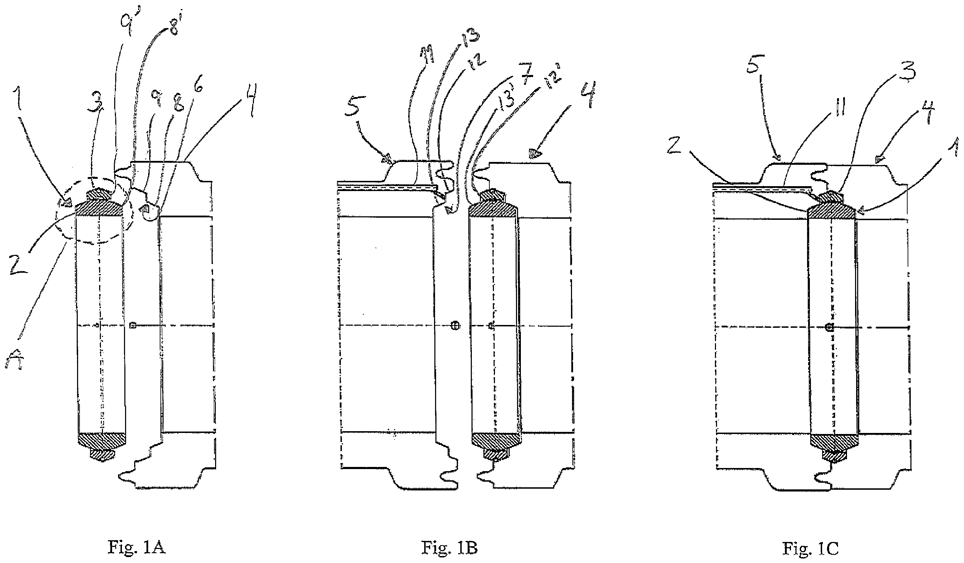

The seal assembly according to the invention is intended to be placed between the ends of a piping connection. The ends may be hub ends as shown in Figs 1A-C. Alternatively the ends may be flanging ends. Fig. 1A shows the seal assembly 1 prior to the positioning within a first seal pocket 6 of a first piping end 4 in a first pipe element. The first piping end 4 comprises a first shoulder 8 and second shoulder 9. The seal assembly 1 comprises a first part 2 and a second part 3. The second part is 3 is arranged on the radial outside of the first part 2 when the parts 2, 3 are connected. Said first part 2 is provided with a first corresponding shoulder 8' for mating with the first shoulder 8 of the piping end 4 in the first pipe, and said second part 3 is provided with a second corresponding shoulder 9' for mating with the second shoulder 9 of the piping end 4 forming a double seal against the first piping end 4, possibly a metal to metal seal. In the figure, the parts making up the seal assembly 1, the first part 2 and second part 3, are shown connected to each other.

Fig. 1B shows that the seal assembly 1 has been placed in the first seal pocket 6, but prior to that the seal assembly has entered a second seal pocket 7 of the second piping end 5 in the second pipe element. Similar to the first piping end 4, the second piping end 5 includes a second seal pocket 7 and shoulders shown as third shoulder 12 and fourth shoulder 13. Further, the piping end 5 is provided with a bore 11 providing fluid communication with a source of pressurized fluid (not shown) arranged on the surface or subsea (not shown) for pressure testing the seal assembly 1.

The seal assembly 1 is provided with a third corresponding shoulder 12' and fourth corresponding shoulder 13' that corresponds with the third shoulder 12 and fourth shoulder 13 in the second seal pocket 7 of the second piping end 5, respectively, forming a double seal, possibly a metal to metal seal, against the second piping end 5 when connected.

In fig. 1C it is shown the situation when the piping connection is made up with the seal assembly 1 located between the first piping end 4 and second piping end 5.

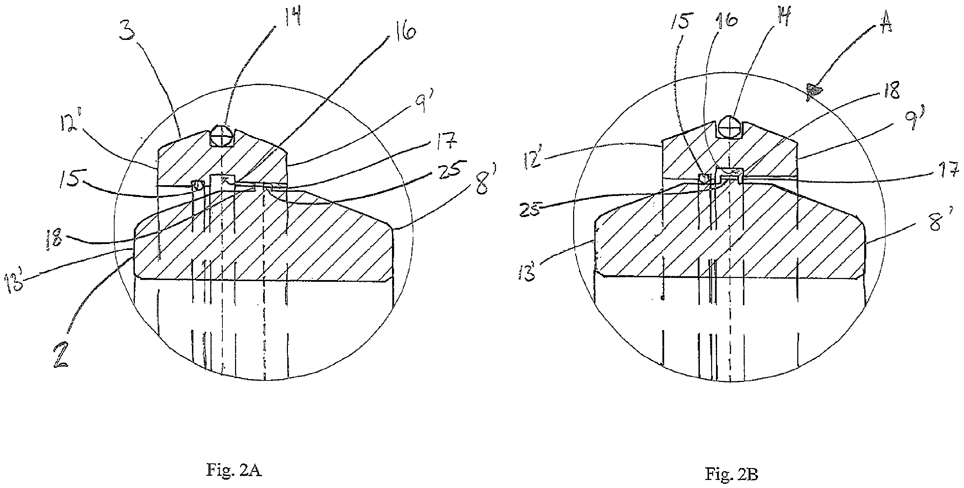

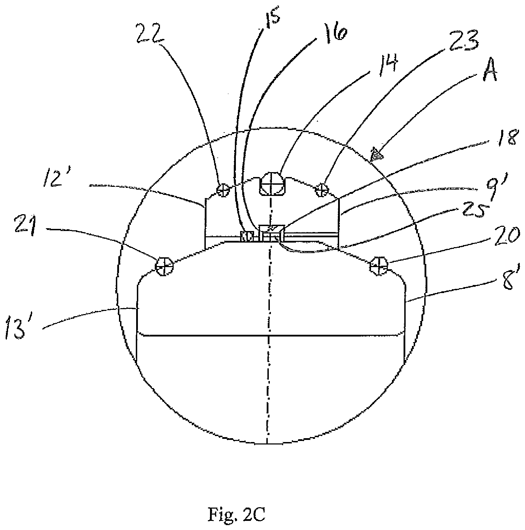

Fig. 2A shows an enlarged view of a part of the seal assembly 1 and shows a preferred embodiment of the assembling of the first part 2 and the second part 3. The first part 2 is provided with at least one projecting rib 18 extending at least partially along the outer circumference thereof. The projecting rib 18 can be one continuous rib or a number of separate ribs located along the outer circumference of the first part 2. The upper end of the projecting rib 18 is preferably provided with threads (shown in outline in Fig. 2C with the depth of the threads indicated by line 25). The second part 3 is shown having a section 17 extending at least partially along the inner surface from a first axial end ending in a recess 16. In the disclosed embodiment, the section 17 is an inner circumferential plane having complementary threads adapted to mate with the threads on the upper end of the projecting rib 18 during part of the assembling. During assembling, the second part 3 is screwed onto the first part 2 with the complementary threads on the section 17 and projecting rib 18. In Fig. 2A the assembly is shown with the section 17 screwed halfway onto the rib 18. The section 17 is shown on the right hand side of the second part 3, but may in an alternative embodiment be arranged on the left hand side of the second part 3. Fig. 2B shows the part of the assembling where the section 17 has been screwed all the way past the projecting rib 18 so that the threads are no longer engaged with each other. As seen in Fig. 2B, the recess 16 has a slightly larger cross-sectional area than the cross-sectional area occupied by the projecting rib 18 when the first 2 and second 3 parts are connected. This difference in cross-section areas allow for a small relative movement between the first part 2 and the second part 3 while maintaining a double seal, possibly double metal to metal seal.

The second part 3 may further be equipped with a first elastomer 15 to center the first part 2 to the second part 3 and also to prevent the first part 2 to re-enter the thread on the second part. In addition, a second elastomer seal 14 may be located at the outer circumference of the seal assembly 1 to provide a connection between the first piping end 4 and the seal assembly 1.

Fig. 2C shows an arrangement of elastomers that possibly may provide additional sealing between the piping ends 4, 5. As can be seen from the figure, elastomer seals 20, 21 are provided on opposite sides of the first part 2 to provide seals against the shoulders 8, 13. Other elastomer seals 22, 23 are located on the second part 3 to seal against the shoulders 9, 12. Due to the fact that the second part 3 can move slightly in relation to the first part 2, the elastomer seals 20, 21, 22, 23 will provide a good seal between the first piping end 4 and the second piping end 5 regardless of potential misalignments of the first pipe element 4 and the second pipe element 5 when connected.

By providing a seal assembly as disclosed herein the object of the invention is achieved, i.e. providing a seal assembly that allows some relative movement in the connection without damaging the sealing functionality.

The invention is herein described in non-limiting embodiments. A skilled person in the art will understand that there may be made alterations and modifications to the embodiments that are within the scope of the invention as defined in the attached claims. There are for example several ways in which the second part 3 of the seal assembly can be mounted onto the first part 2. For example, the second part 3 may be a split ring that can be flexed outwardly to fit over the rib 18 and then spring back to its original circular shape when it has passed over the rib.

## Claims

1. A seal assembly (1) for a piping connection comprising, either
i);
- a first part (2) having at least one projecting rib (18) extending at least partially along an outer circumference thereof, where the first part (2) is provided with a first and fourth corresponding shoulder (8', 13') for sealing connection with a first and fourth shoulder (8, 13) of a first and second piping end (4, 5) when connected, and
- a second part (3) arranged to be attached to the first part, the second part being provided with at least one recess (16) on an inner surface thereof, which recess (16) is adapted to receive the projecting rib (18) when the first (2) and second (3) parts are connected, and wherein the second part (3) is provided with second and third corresponding shoulders (9', 12') for sealing connection with a second and third shoulder (9, 12) of the first and second piping ends (4, 5) when connected,
or ii)
- a first part (2) having at least one recess (16) extending at least partially along an outer circumference thereof, where the first part (2) is provided with a first and fourth corresponding shoulder (8', 13') for sealing connection with a first and fourth shoulder (8, 13) of a first and second piping end (4, 5) when connected, and
- a second part (3) arranged to be attached to the first part, the second part being provided with at least one projecting rib (18) on an inner surface thereof, which recess (16) is adapted to receive the projecting rib (18) when the first (2) and second (3) parts are connected, and wherein the second part (3) is provided with second and third corresponding shoulders (9', 12') for sealing connection with a second and third shoulder (9, 12) of the first and second piping ends (4, 5) when connected,
and,
wherein, according to both i) and ii),
- the recess (16) has a larger cross-section area than the cross-section area occupied by the projecting rib (18) within the recess (16),
such that when the first (2) and second (3) parts are connected, they are free to move relative to each other in at least one direction.

2. A seal assembly (1) according to claim 1, wherein the second part (3) is provided with at least one section (17) extending at least partially along the inner surface from a first axial end ending in the recess (16), wherein the at least one section (17) and recess (16) of the second part (3) is provided to receive the at least one projecting rib (18) of the first part (2) during connection of the first part (2) and second part (3).

3. A seal assembly (1) according to claim 2, wherein the at least one section (17) in the second part (3) is provided with threads, and the projecting rib (18) in the first part (2) is provided with corresponding threads.

4. A seal assembly (1) according to any of the preceding claims, wherein the first part (2) and second part (3) are made of metal.

5. A seal assembly (1) according to any of the preceding claims, wherein one of the first part (2) or second part (3) is made of metal and the other is made of composite material.

6. A seal assembly (1) according to any of the preceding claims, wherein the first part (2) and second part (3) are made of composite material.

7. A seal assembly (1) according to any of the preceding claims, wherein the seal assembly (1) comprises means (11) for performing pressure testing of the seal.

8. A seal assembly according to any of the preceding claims, wherein the first part (2) and second part (3) are ring-shaped.

## Patentansprüche

1. Dichtungsanordnung (1) für eine Rohrverbindung, umfassend entweder
i);
- ein erstes Teil (2) mit wenigstens einer vorstehenden Rippe (18), die sich zumindest teilweise entlang eines äußeren Umfangs davon erstreckt, wobei das erste Teil (2) mit einer ersten und vierten entsprechenden Schulter (8', 13') zur abdichtenden Verbindung mit einer ersten und vierten Schulter (8, 13) eines ersten und zweiten Rohrendes (4, 5), wenn verbunden, versehen ist, und
- ein zweites Teil (3), das zum Anbringen am ersten Teil angeordnet ist, wobei das zweite Teil mit wenigstens einer Ausnehmung (16) an einer Innenfläche davon versehen ist, wobei die Ausnehmung (16) zum Aufnehmen der vorstehenden Rippe (18) ausgebildet ist, wenn das erste (2) und zweite (3) Teil verbunden sind, und wobei das zweite Teil (3) mit einer zweiten und dritten entsprechenden Schulter (9', 12') zur abdichtenden Verbindung mit einer zweiten und dritten Schulter (9, 12) des ersten und zweiten Rohrendes (4, 5), wenn verbunden, versehen ist,
oder ii)
- ein erstes Teil (2) mit wenigstens einer Ausnehmung (16), die sich zumindest teilweise entlang eines äußeren Umfangs davon erstreckt, wobei das erste Teil (2) mit einer ersten und vierten entsprechenden Schulter (8', 13') zur abdichtenden Verbindung mit einer ersten und vierten Schulter (8, 13) eines ersten und zweiten Rohrendes (4, 5), wenn verbunden, versehen ist, und
- ein zweites Teil (3), das zum Anbringen am ersten Teil angeordnet ist, wobei das zweite Teil mit wenigstens einer vorstehenden Rippe (18) an einer Innenfläche davon versehen ist, wobei die Ausnehmung (16) zum Aufnehmen der vorstehenden Rippe (18) ausgebildet ist, wenn das erste (2) und zweite (3) Teil verbunden sind, und wobei das zweite Teil (3) mit einer zweiten und dritten entsprechenden Schulter (9', 12') zur abdichtenden Verbindung mit einer zweiten und dritten Schulter (9, 12) des ersten und zweiten Rohrendes (4, 5), wenn verbunden, versehen ist,
und
wobei gemäß sowohl i) als auch ii)
- die Ausnehmung (16) eine größere Querschnittsfläche aufweist als die Querschnittsfläche, die durch die vorstehende Rippe (18) in der Ausnehmung (16) belegt ist,
sodass, wenn das erste (2) und zweite (3) Teil verbunden sind, diese in Bezug aufeinander in zumindest einer Richtung frei bewegbar sind.

2. Dichtungsanordnung (1) nach Anspruch 1, wobei das zweite Teil (3) mit wenigstens einem Abschnitt (17) versehen ist, der sich zumindest teilweise entlang der Innenfläche von einem ersten axialen Ende erstreckt und in der Ausnehmung (16) endet, wobei der wenigstens eine Abschnitt (17) und die Ausnehmung (16) des zweiten Teils (3) zum Aufnehmen der wenigstens einen vorstehenden Rippe (18) des ersten Teils (2) beim Verbinden des ersten Teils (2) und des zweiten Teils (3) vorgesehen sind.

3. Dichtungsanordnung (1) nach Anspruch 2, wobei der wenigstens eine Abschnitt (17) in dem zweiten Teil (3) mit einem Gewinde versehen ist und die vorstehende Rippe (18) im ersten Teil (2) mit einem entsprechenden Gewinde versehen ist.

4. Dichtungsanordnung (1) nach einem der vorangehenden Ansprüche, wobei das erste Teil (2) und das zweite Teil (3) aus Metall bestehen.

5. Dichtungsanordnung (1) nach einem der vorangehenden Ansprüche, wobei eines von dem ersten Teil (2) oder dem zweiten Teil (3) aus Metall besteht und das andere aus einem Verbundwerkstoff besteht.

6. Dichtungsanordnung (1) nach einem der vorangehenden Ansprüche, wobei das erste Teil (2) und das zweite Teil (3) aus einem Verbundwerkstoff bestehen.

7. Dichtungsanordnung (1) nach einem der vorangehenden Ansprüche, wobei die Dichtungsanordnung (1) ein Mittel (11) zum Durchführen von Druckprüfungen an der Dichtung umfasst.

8. Dichtungsanordnung nach einem der vorangehenden Ansprüche, wobei das erste Teil (2) und das zweite Teil (3) ringförmig sind.

## Revendications

1. Ensemble de joint (1) pour un raccordement de tuyau comprenant :
i) ;
une première partie (2) ayant au moins une nervure en saillie (18) s'étendant au moins partiellement le long de la circonférence externe, où la première partie (2) est prévue avec un premier et un quatrième épaulement (8', 13') pour le raccordement étanche avec un premier et un quatrième épaulement (8, 13) d'une première et d'une seconde extrémité de tuyau (4, 5) lorsqu'elles sont raccordées, et
une seconde partie (3) agencée pour être fixée sur la première partie, la seconde partie étant prévue avec au moins un évidement (16) sur sa surface interne, lequel évidement (16) est adapté pour recevoir la nervure en saillie (18) lorsque les première (2) et seconde (3) parties sont raccordées, et dans lequel la seconde partie (3) est prévue avec des deuxième et troisième épaulements (9', 12') correspondants pour le raccordement étanche avec des deuxième et troisième épaulements (9, 12) des première et seconde extrémités de tuyau (4, 5) lorsqu'elles sont raccordées,
ou ii)
une première partie (2) ayant au moins un évidement (16) s'étendant au moins partiellement le long de sa circonférence externe, où la première partie (2) est prévue avec un premier et un quatrième épaulement (8', 13') correspondants pour le raccordement étanche avec un premier et un quatrième épaulement (8, 13) d'une première et d'une seconde extrémité de tuyau (4, 5) lorsqu'elles sont raccordées, et
une seconde partie (3) agencée pour être fixée à la première partie, la seconde partie étant prévue avec au moins une nervure en saillie (18) sur sa surface interne, lequel évidement (16) est adapté pour recevoir la nervure en saillie (18) lorsque les première (2) et seconde (3) parties sont raccordées, et dans lequel la seconde partie (3) est prévue avec des deuxième et troisième épaulements (9', 12') correspondants pour le raccordement étanche avec des deuxième et troisième épaulements (9, 12) des première et seconde extrémités de tuyau (4, 5) lorsqu'elles sont raccordées, et
dans lequel, à la fois selon i) et ii),
l'évidement (16) a une surface transversale supérieure à la surface transversale occupée par la nervure en saillie (18) à l'intérieur de l'évidement (16) de sorte que lorsque les première (2) et seconde (3) parties sont raccordées, elles sont libres de se déplacer l'une par rapport à l'autre dans au moins une direction.

2. Ensemble de joint (1) selon la revendication 1, dans lequel la seconde partie (3) est prévue avec au moins une section (17) s'étendant au moins partiellement le long de la surface interne à partir d'une première extrémité axiale se terminant dans l'évidement (16), dans lequel la au moins une section (17) et l'évidement (16) de la seconde partie (3) est prévu pour recevoir la au moins une nervure en saillie (18) de la première partie (2) pendant le raccordement de la première partie (2) et de la seconde partie (3).

3. Ensemble de joint (1) selon la revendication 2, dans lequel la au moins une section (17) dans la seconde partie (3) est prévue avec des filetages et la nervure en saillie (18) dans la première partie (2) est prévue avec des filetages correspondants.

4. Ensemble de joint (1) selon l'une quelconque des revendications précédentes, dans lequel la première partie (2) et la seconde partie (3) sont réalisées à partir de métal.

5. Ensemble de joint (1) selon l'une quelconque des revendications précédentes, dans lequel l'une parmi la première partie (2) ou la seconde partie (3) est réalisée à partir de métal et l'autre est réalisée à partir d'un matériau composite.

6. Ensemble de joint (1) selon l'une quelconque des revendications précédentes, dans lequel la première partie (2) et la seconde partie (3) sont réalisées à partir d'un matériau composite.

7. Ensemble de joint (1) selon l'une quelconque des revendications précédentes, dans lequel l'ensemble de joint (1) comprend des moyens (11) pour réaliser l'essai de pression du joint.

8. Ensemble de joint selon l'une quelconque des revendications précédentes, dans lequel la première partie (2) et la seconde partie (3) sont de forme annulaire.
